(19) Europäisches Patentamt / European Patent Office / Office européen des brevets

(11) **EP 3 315 553 B1**

(12) **EUROPEAN PATENT SPECIFICATION**

(45) Date of publication and mention
of the grant of the patent:
**30.09.2020   Bulletin 2020/40**

(51) Int Cl.:
*C08J 3/20* (2006.01)      *C08J 3/12* (2006.01)
*C08L 67/02* (2006.01)      *C08K 3/36* (2006.01)
*C08K 3/40* (2006.01)      *C08K 3/013* (2018.01)
*C08K 7/14* (2006.01)      *C08K 7/06* (2006.01)
*C08K 3/22* (2006.01)      *C08K 3/30* (2006.01)
*C08K 3/04* (2006.01)

(21) Application number: **16817553.7**

(22) Date of filing: **27.04.2016**

(86) International application number:
**PCT/JP2016/063241**

(87) International publication number:
**WO 2017/002443 (05.01.2017 Gazette 2017/01)**

(54) **POLYESTER RESIN POWDER MIXTURE**

POLYESTERHARZPULVERMISCHUNG

MÉLANGE DE POUDRE DE RÉSINE DE POLYESTER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **29.06.2015   JP 2015129966**

(43) Date of publication of application:
**02.05.2018   Bulletin 2018/18**

(73) Proprietor: **Toray Industries, Inc.**
**Tokyo 103-8666 (JP)**

(72) Inventors:
  • **WATANABE, Kei**
    **Tokai-shi**
    **Aichi 476-8567 (JP)**
  • **TAKEDA, Kazusada**
    **Tokai-shi**
    **Aichi 476-8567 (JP)**
  • **NISHIMURA, Yosuke**
    **Nagoya-shi**
    **Aichi 455-8502 (JP)**
  • **TAKEZAKI, Hiroshi**
    **Nagoya-shi**
    **Aichi 455-8502 (JP)**
  • **MIYAMA, Hisashi**
    **Tokyo 103-8666 (JP)**
  • **NISHIDA, Mikiya**
    **Tokyo 103-8666 (JP)**

(74) Representative: **Mewburn Ellis LLP**
**Aurora Building**
**Counterslip**
**Bristol BS1 6BX (GB)**

(56) References cited:
DE-A1- 4 237 032          DE-A1-102005 032 236
JP-A- S5 162 858          JP-A- 2006 017 954
JP-A- 2006 206 897        JP-A- 2010 031 104
JP-A- 2011 184 522        JP-A- 2012 167 274
JP-A- 2013 119 565        JP-A- 2015 083 668
US-A- 4 074 006           US-A- 5 451 481
US-A1- 2001 002 305       US-A1- 2008 268 362
US-A1- 2012 289 662

• **DATABASE WPI Week 201262 Thomson
Scientific, London, GB; AN 2012-L94325
XP002787900, & WO 2012/121296 A1 (KUREHA
CORP) 13 September 2012 (2012-09-13)**
• **DATABASE WPI Week 201402 Thomson
Scientific, London, GB; AN 2013-T68567
XP002787901, & CN 103 214 802 A (BEIJING CTA
YOUTH HIGH TECH FIBER CO LTD) 24 July 2013
(2013-07-24)**

**Description**

TECHNICAL FIELD

The present invention relates to a polyester resin powder mixture having a small mean diameter, high powder flowability, and a low compressability.

BACKGROUND ART

Polyesters such as polybutylene terephthalate (hereinafter occasionally abbreviated as PBT) have properties suitable as engineering plastics including excellent heat resistance, barrier property, chemical resistance, electrical insulation, and moist heat resistance, and have been used in various electric/electronic parts, machine parts, automobile parts, films, fibers, and the like that are produced mainly by injection molding or extrusion molding.

Having such excellent properties, polyester resin particulate products are much in demand as materials for various moldings, printer toners, coatings, heat resistant additives, and the like, and some techniques, such as described below, have been proposed for producing polyester resin particulate products.

Patent document 1 describes a method in which saturated polyester resin pellets are heated and dissolved in dimethyl acetamide or dimethyl formamide and gradually cooled to obtain powder material.

Patent document 2 discloses a method in which an emulsion consisting mainly of two separated phases that contain different polymers as main components is formed and then a poor solvent for either of the polymers is brought into contact with the emulsion to precipitate that polymer, thereby providing fine polymer particles.

To improve the fluidity of resin powder material, Patent document 3 proposes a method in which inorganic particles are added to increase the distances among particle in order to relax the interaction among the particles. US 2008/0268362 A1 concerns hydrophobic spherical silica microparticles. US 5451481 A concerns a toner composition comprised of resin, pigment, optional charge additive and a hydrophobic flow aid surface additive comprised on grafter alcoholic silicas. JP 2015-083668 A concerns a resin particle excellent in low temperature fixability and storage stability. JP 2012-167274 A concerns environment-friendly resin particles which contain a colored monomer. JP 2006-017954 A concerns a toner excellent in balance of static charge characteristics and durability. JP 2013-119565 A concerns a resin particle superior in aggregation resistance. JP 2006-206897 A concerns resin particles having a uniform particle size and a good powder flowability. JP S51-62858 A concerns a method for manufacturing polyolefin particles.

PRIOR ART DOCUMENTS

PATENT DOCUMENTS

    Patent document 1: JP S63-248875 A
    Patent document 2: JP 2012-197461 A
    Patent document 3: JP 2013-166667 A

Non-patent documents

Non-patent document 1: "Terminology Dictionary of Powder Technology - 2nd Edition", edited by the Society of Powder Technology, Japan, published by Nikkan Kogyo Shimbun, Ltd., March 30, 2000, pp. 56-57

SUMMARY OF THE INVENTION

PROBLEM TO BE SOLVED BY THE INVENTION

However, when a polyester resin powder material produced by the method described in Patent document 1 or 2 is used for molding, its excellent electrical insulating properties will lead to a low flowability as a result of its coagulation which will be easily caused by static electricity, resulting in frequent troubles in supply and discharge in silos etc. during the production process. In addition, polyester resin powder materials are high in compressability and suffer from an increase in bulkiness and a further decrease in flowability at the bottoms of the silo, hopper, etc., as a result of compression caused by powder pressure.

The present invention was achieved as a result of studies aiming at efficient production of a polyester resin powder material that is small in mean diameter, high in powder flowability, and low in compressability and serves to form high strength moldings.

MEANS FOR SOLVING THE PROBLEM

The present inventors have arrived at the invention described below as a result of intensive studies aiming to solve the above problem.
Details of the present invention are as described below.

(1) A polybutylene terephthalate resin powder mixture including a polybutylene terephthalate resin powder material having a mean diameter of more than 1 $\mu$m and 100 $\mu$m or less and a uniformity coefficient of 4 or less and inorganic particles having a mean diameter of 20 to 500 nm, the inorganic particles accounting for 0.1 to 5 parts by weight relative to 100 parts by weight of the polybutylene terephthalate resin powder material.
(2) The polybutylene terephthalate resin powder mixture as set forth in paragraph (1), wherein the inorganic particles are silica particles.
(3) The polybutylene terephthalate resin powder mixture as set forth in paragraph (1) or (2) further including an inorganic reinforcement material having an average maximum size of 1 $\mu$m or more and 200 $\mu$m or less and accounting for 25 to 150 parts by weight relative to 100 parts by weight of the polybutylene terephthalate resin powder material.
(4) The polybutylene terephthalate resin powder mixture as set forth in paragraph (3), wherein the inorganic reinforcement material is at least one selected from the group consisting of glass beads, glass flakes, glass fiber, carbon fiber, aluminum oxide, soda lime glass, borosilicate glass, silica, aluminosilicate ceramics, limestone, gypsum, bentonite, precipitated sodium silicate, amorphous precipitated silica, amorphous precipitated calcium silicate, amorphous precipitated magnesium silicate, amorphous precipitated lithium silicate, sodium chloride, Portland cement, magnesium phosphate cement, magnesium oxychloride cement, magnesium oxysulfate cement, zinc phosphate cement, and zinc oxide.

ADVANTAGEOUS EFFECTS OF THE INVENTION

The present invention serves for efficient production of a polyester resin powder mixture that is small in mean diameter, high in powder flowability, low in compressability, and useful to provide high strength moldings.

DESCRIPTION OF EMBODIMENTS

[Polyester resin]

A polyester resin suitable for the present invention can be produced through condensation polymerization of either a polybasic acid or a polybasic acid dialkyl ester and a polyhydric alcohol as main materials. Here, being the main materials means that the constituent units formed from the polybasic acid or the polybasic acid dialkyl ester and the polyhydric alcohol will account for 25 wt% or more of the resulting polymer. The constituent units formed from the polybasic acid or the polybasic acid dialkyl ester and the polyhydric alcohol preferably accounts for 40 wt% or more, more preferably 50 wt% or more. Here, there are no specific limitations on the polyhydric alcohol, and examples include ethylene glycol, diethylene glycol, triethylene glycol, 1,2-propylene glycol, other propylene glycols, dipropylene glycols, 1,4-butanediol, other butanediols, neopentyl glycol, 1,6-hexanediol, other alkylene glycols (aliphatic glycols), alkylene oxide adducts thereof, bisphenol A, hydrogenated bisphenol, other bisphenols, phenolic glycols of these alkylene oxide adducts, alicyclic and aromatic diols (including monocyclic and polycyclic ones), glycerin, trimethylolpropane, and other triols. They may be used singly or as a mixture of a plurality thereof.
Examples of the polybasic acid (polycarboxylic acid) include saturated or unsaturated (or aromatic) polybasic acids such as malonic acid, succinic acid, adipic acid, azelaic acid, sebacic acid, fumaric acid, maleic acid, itaconate, phthalic acid, modified acids thereof (for example, hexahydrophthalic anhydrides), isophthalic acid, terephthalic acid, trimellitic acid, trimesic acid, and pyromellitic acid, as well as anhydrides thereof and lower alkyl esters thereof, may be used singly or as a mixture of a plurality thereof.
The polyester resin is a PBT resin. A PBT resin is a resin in which PBTs account for 80 wt% or more, preferably 85 wt% or more, and it may be copolymerized or mixed with another resin that is not a PBT resin. For the present invention, a PBT is a polyester containing a butylene terephthalate component as main repeating unit. The main repeating unit as referred to here is one that accounts for 80 mol% or more, preferably 85 mol% or more, of the total repeating units. Other acid components include aromatic dicarboxylic acids such as isophthalic acid, orthophthalic acid, naphthalene dicarboxylic acid, diphenyl dicarboxylic acid, and sodium sulfoisophthalic acid; alicyclic dicarboxylic acids such as cyclohexanedicarboxylic acid and deca phosphorus dicarboxylic acid; and aliphatic dicarboxylic acids such as oxalic acid, malonic acid, succinic acid, sebacic acid, adipic acid, and dodecanedioic acid; whereas specific examples of such other diol components that may be used partially include aliphatic diols such as ethylene glycol, diethylene glycol, triethylene glycol, polyethylene glycol, propylene glycol, neopentyl glycol, 1,6-hexanediol, polypropylene glycol, and polytetramethylene glycol; alicyclic diols such as 1,4-cyclohexanediol and 1,4-cyclohexanedimethanol; and aromatic diols such as 2,2-bis(4'-hydroxyphenyl) propane. Each of these copolymerization components preferably accounts for 40 mol% or less relative to the terephthalic acid or 1,4-butanediol.

The polyester resins preferably have a weight average molecular weight of 1,000 to 1,000,000. The lower limit of weight average molecular weight is preferably 1,000, more preferably 5,000, and still more preferably 10,000. The upper limit of weight average molecular weight is preferably 1,000,000, more preferably 500,000, particularly preferably 100,000, and most preferably 50,000.

A high strength will not be achieved during the molding process if the weight average molecular weight of the polyester resin is less than 1,000, whereas the melt viscosity will increase to make molding difficult if it is more than 1,000,000.

The weight average molecular weight as referred to herein means a weight average molecular weight measured by gel permeation chromatography (GPC) using 1,1,1,3,3,3-hexafluoro-2-propanol as solvent and converted in terms of polystyrene.

Furthermore, the difference between the crystallization temperature and the melting point of the polyester resin is preferably 30°C or more. The melting point and the crystallization temperature referred to here mean the temperature at the endothermic peak attributed to melting and that at the exothermic peak attributed to crystallization determined during a differential scanning calorimetry (DSC) process in which the polymer is heated once over a temperature range from 30°C to a temperature 30°C above its melting point at a heating rate of 20°C/ min, maintained there for one minute, and then cooled to 0°C at a rate of 20°C/ min. Film breakage or cracking may be caused during film production from melts if the difference between the crystallization temperature and the melting point of the polyester resin is less than 30°C.

[Polyester resin powder material]

A polyester resin powder material having a mean diameter of more than 1 $\mu$m and 100 $\mu$m or less is used for the present invention. The lower limit of the mean diameter of the polyester resin powder material is preferably 3 $\mu$m, more preferably 5 $\mu$m, still more preferably 8 $\mu$m, particularly preferably 10 $\mu$m, extremely preferably 13 $\mu$m, and most preferably 15 $\mu$m. The upper limit of the mean diameter is preferably 95 $\mu$m, more preferably 90 $\mu$m, still more preferably 85 $\mu$m, particularly preferably 80 $\mu$m, extremely preferably 75 $\mu$m, and most preferably 70 $\mu$m.

In addition, the polyester resin powder material preferably has a uniform particle size distribution. A polyester resin powder material having a smaller uniformity coefficient shows a lower compressability under powder pressure, and the polyester resin according to the present invention should have a uniformity coefficient of 4 or less. The polyester resin powder material preferably has a uniformity coefficient of 3.2 or less, more preferably 3.0 or less, still more preferably 2.8 or less, particularly preferably 2.5 or less, and extremely preferably 2 or less. The lower limit of the uniformity coefficient is theoretically 1, but practically, it is preferably 1.1 or more, more preferably 1.15 or more, still more preferably 1.2 or more, particularly preferably 1.3 or more, and extremely preferably 1.4 or more. If the polyester resin powder material has a uniformity coefficient of more than 4, the compressability will be too large to realize the advantageous effects of the invention even if the mean diameter is within the appropriate range.

For the present invention, the mean diameter of a polyester resin powder material means the d50 particle diameter, which corresponds to 50% accumulation counted from the smaller end of the particle diameter distribution curve measured by a laser diffraction type particle size analyzer according to Mie scattering/diffraction theory.

For the present invention, furthermore, the uniformity coefficient of a polyester resin powder material is calculated by dividing the d60 particle diameter, which corresponds to 60% accumulation counted from the smaller end of the particle diameter distribution curve measured as above, by the d10 particle diameter, which corresponds to 10% accumulation counted from the smaller end.

[Inorganic particles]

For the present invention, it is important to add inorganic particles in order to further improve the flowability of the polyester resin powder material. The flowability of the polyester resin powder material deteriorates due to interactions with particles in the neighborhood as the particle diameter decreases, but the addition of inorganic particles smaller in particle diameter than the polyester resin powder material acts to increase the interparticle distances, thereby improving the flowability.

For the present invention, the inorganic particles to be added to the polyester resin powder material should have a mean diameter of 20 nm or more and 500 nm or less. The mean diameter referred to here is measured by the same method as used to determine the mean diameter of the polyester resin powder material.

The upper limit of the mean diameter of the inorganic particles is preferably 400 nm, more preferably 300 nm, still more preferably 200 nm, particularly preferably 150 nm, and extremely preferably 100 nm. The lower limit is preferably 20 nm, more preferably 30 nm, still more preferably 40 nm, and particularly preferably 50 nm. If the inorganic particles have a mean diameter of more than 500 nm, they will fail to have a sufficiently large effect in improving the flowability of the polyester resin powder mixture. If the mean diameter of the inorganic particles is less than 20 nm, on the other hand, they will fail to serve for decreasing the compressability of the polyester resin powder mixture although they can show a flowability improving effect.

When added, inorganic particles of any material may serve effectively as long as they have a mean diameter in the ranges given above, but preferred materials include: calcium carbonate powder materials such as precipitated calcium carbonate, heavy calcium carbonate, fine powdered calcium carbonate, and special calcium based fillers; clay (aluminum silicate powder) materials such as nepheline-syenite fine powder, calcined clay of montmorillonite, bentonite, etc., and silane-modified clay; talc; different types of silica (silicon dioxide) powder such as fused silica, crystal silica, and amorphous silica; silicic acid-containing compounds such as diatomaceous earth and silica sand; crushed natural mineral materials such as pumice powder, pumice balloons, slate powder, and mica powder; alumina-containing compounds such as alumina (aluminum oxide), alumina colloid (alumina sol), alumina white, and aluminum sulfate; mineral materials such as barium sulfate, lithopone, calcium sulfate, molybdenum disulfide, and graphite (black lead); glass based fillers such as glass fiber, glass beads, glass flakes, and foamed glass beads; and others such as spherical fly ash particles, volcanic glass hollow particles, synthesize inorganic hollow particles, single-crystalline potassium titanate, carbon fiber, carbon nanotube, carbon hollow spherical particles, carbon 64 fullerene, anthracite powder, artificial cryolite (cryolite), titanium oxide, magnesium oxide, basic magnesium carbonate, dolomite, potassium titanate, calcium sulfite, mica, asbestos, calcium silicate, aluminum powder, molybdenum sulfide, boron fiber, and silicon carbide fiber; of which more preferable are calcium carbonate powder, silica powder, alumina-containing compounds, and glass-based fillers. Particularly preferable are various types of silica powder and among others, amorphous silica powder is extremely preferable from the industrial point of view because it is little harmful to human bodies.

There are no specific limitations on the shape of these inorganic particles used for the present invention, and they may be spherical, porous, hollow, or irregular, of which spherical shapes are preferable from the viewpoint of high flowability.

The spherical shapes referred to in this case include not only the perfect sphere, but also deformed spheres. Here, the shape of an inorganic fine particle is evaluated on the basis of the circularity of the particle projected onto a two-dimensional plane. The circularity referred to above is calculated by dividing the circumference of a circle having the same area as the projected particle image by the circumference of the projected particle. The average circularity of such inorganic particles is preferably 0.7 or more and 1 or less, 0.8 or more and 1 or less, and still more preferably 0.9 or more and 1 or less.

Different silica powder materials are roughly divided by the production method into fumed silica produced by combustion of a silane compound, deflagrated silica produced by explosive combustion of metal silicon powder, wet silica produced by neutralization of sodium silicate and a mineral acid (including precipitated silica produced by synthesis and coagulation under alkaline conditions and gelled silica produced by synthesis and coagulation under acidic conditions), colloidal silica (silica sol) produced by synthesis of an acidic silicic acid from sodium silicate through sodium removal with ion exchange resin, followed by its polymerization under alkaline conditions, and sol-gel silica produced by hydrolysis of a silane compound, of which sol-gel silica is preferred to realize the advantageous effect of the invention.

Thus, the use of inorganic particles of silica is preferable, and the use of sol-gel silica and/or spherical silica is more preferable. Among others, the use of sol-gel spherical silica is most preferable.

It is still more preferable to use particles that are surface-hydrophobized with a silane compound, silazane compound, etc. Such surface hydrophobization serves to depress the coagulation of the inorganic particles and enhance the dispersion of the inorganic particles into the polyester resin powder material. Such silane compounds as described above include, for example, non-substituted or halogen-substituted trialkoxysilanes such as methyl trimethoxysilane, methyl triethoxysilane, ethyl trimethoxysilane, ethyl triethoxysilane, n-propyl trimethoxysilane, n-propyl triethoxysilane, isopropyl trimethoxysilane, isopropyl triethoxysilane, butyl trimethoxysilane, butyl triethoxysilane, hexyl trimethoxysilane, trifluoropropyl trimethoxysilane, and heptadecafluorodecyl trimethoxysilane, of which preferable are methyl trimethoxysilane, methyl triethoxysilane, ethyl trimethoxysilane and ethyl triethoxysilanepreferably, of which more preferable are methyl trimethoxysilane, methyl triethoxysilane, and partial hydrolysis condensation products thereof. Such silazane compounds as described above include, for example, hexamethyl disilazane and hexaethyl disilazane, of which hexamethyl disilazane is more preferable. Useful monofunctional silane compounds include, for example, monosilanol compounds such as trimethyl silanol and triethyl silanol; monochlorosilanes such as trimethyl chlorosilane and triethyl chlorosilane; monoalkoxysilanes such as trimethyl methoxysilane and trimethyl ethoxysilane; monoaminosilanes such as trimethylsilyl dimethylamine and trimethylsilyl diethylamine; and monoacyl oxysilanes such as trimethyl acetoxy silane; of which preferable are trimethyl silanol, trimethyl methoxysilane, and trimethylsilyl diethylamine, of which particularly preferable are trimethyl silanol and trimethyl methoxysilane.

These inorganic particles may be used singly or as a combination of two or more thereof.

The inorganic particles blended should account for 0.1 part by weight or more and 5 parts by weight or less relative to 100 parts by weight of the polyester resin powder material. The upper limit of the blending quantity is preferably 4 parts by weight, more preferably 3 parts by weight, still more preferably 2 parts by weight, and particularly preferably 1 part by weight.

The lower limit of the blending quantity is preferably 0.2 part by weight, more preferably 0.3 part by weight, and still more preferably 0.4 part by weight.

If the blending quantity of the inorganic particles is more than 5 parts by weight, they will fail to have a sufficiently large effect in decreasing the compressability of the polyester resin powder mixture. They will not serve effectively to improve the flowability. If the blending quantity of the inorganic particles is less than 0.1 part by weight, on the other hand, they will not serve effectively to improve the flowability.

[Inorganic reinforcement material]

For the present invention, an inorganic reinforcement material may be added with the aim of providing a molded polyester resin powder material having an increased strength.

For the present invention, such an inorganic reinforcement material to be added to a polyester resin powder material preferably has an average maximum size of 1 $\mu$m or more and 200 $\mu$m or less. The upper limit of the average maximum size of the inorganic reinforcement material is preferably 200 $\mu$m, more preferably 180 $\mu$m, still more preferably 170 $\mu$m, particularly preferably 160 $\mu$m, and extremely preferably 150 $\mu$m. The lower limit is preferably 1 $\mu$m, more preferably 5 $\mu$m, still more preferably 10 $\mu$m, and particularly preferably 15 $\mu$m. If the average maximum size of the inorganic reinforcement material is 200 $\mu$m or less, the polyester resin powder mixture will not suffer from a deterioration in flowability, whereas if the average maximum size of the inorganic reinforcement material is 1 $\mu$m or more, a sufficiently large increase in strength will be achieved when molding the polyester resin powder mixture.

In the case of a fibrous inorganic reinforcement material, the maximum size means the fiber length and the average maximum size means the average fiber length. In addition, it is preferable for the fiber diameter to be 0.1 $\mu$m or more and 50 $\mu$m or less. The lower limit of the fiber diameter is preferably 0.1 $\mu$m, more preferably 0.5 $\mu$m, and particularly preferably 1 $\mu$m. On the other hand, the upper limit of the fiber diameter is preferably 50 $\mu$m, more preferably 40 $\mu$m, and particularly preferably 30 $\mu$m. Here, the fiber length and the fiber diameter are determined by observing a specimen by electron microscopy at a magnification of 1,000 times, randomly selecting 100 pieces of fiber in the image, and averaging their length measurements.

In the case of a nonfibrous inorganic reinforcement material, the mean diameter is taken as the average maximum size. Here, the mean diameter is measured by the same method as used for the polyester powder material.

Inorganic reinforcement material of any substance may serve effectively as long as they have an average maximum particle diameter in the ranges given above, but preferred ones include: calcium carbonate powder materials such as precipitated calcium carbonate, heavy calcium carbonate, fine powdered calcium carbonate, and special calcium based fillers; clay (aluminum silicate powder) materials such as nepheline-syenite fine powder, calcined clay of montmorillonite, bentonite, etc., and silane-modified clay;
talc;
different types of silica (silicon dioxide) powder such as fused silica, crystal silica, and amorphous silica;
silicic acid-containing compounds such as diatomaceous earth and silica sand;
crushed natural mineral materials such as pumice powder, pumice balloons, slate powder, and mica powder;
alumina-containing compounds such as alumina (aluminum oxide), alumina colloid (alumina sol), alumina white, and aluminum sulfate;
mineral materials such as barium sulfate, lithopone, calcium sulfate, molybdenum disulfide, and graphite (black lead);
glass based fillers such as glass fiber, glass beads, glass flakes, foamed glass beads;
and others such as spherical fly ash particles, volcanic glass hollow particles, synthesize inorganic hollow particles, single-crystalline potassium titanate, carbon fiber, carbon nanotube, carbon hollow particles, carbon 64 fullerene, anthracite powder, artificial cryolite (cryolite), titanium oxide, magnesium oxide, basic magnesium carbonate, dolomite, potassium titanate, calcium sulfite, mica, asbestos, calcium silicate, aluminum powder, molybdenum sulfide, boron fiber, and silicon carbide fiber; of which more preferable are glass-based fillers and carbon fiber. These inorganic reinforcement materials may be used singly or as a combination of two or more thereof.

[Production method for polyester resin powder mixture]

For the present invention, a powder material suitable for the present invention can be obtained by preparing polyester resin particles with a large mean diameter or polyester resin particles with a large uniformity coefficient (i.e., that are not uniform) to be used as raw material and processing them by an appropriate technique such as the spray drying method in which the raw material is crushed and dissolved in a solvent and then spray-dried, the poor solvent precipitation method in which an emulsion is formed in a solvent and then brought into contact with a poor solvent, the submerged drying method in which an emulsion is formed in a solvent, followed by drying and removing the organic solvent, and the forced melt-kneading method in which mechanically kneading the resin component to be processed into particles together with another resin component to form a sea-island structure, followed by removing the sea component using a solvent.

The adoption of crushing is preferred from the viewpoint of economic efficiency, but there are no specific limitations on the method to be used for crushing, and examples include the use of a jet mill, bead mill, hammer mill, ball mill, sand mill, turbo mill, and freeze crusher. The adoption of a dry crushing method using a turbo mill, jet mill, or freeze crusher is preferable, and the use of a freeze crusher is more preferable.

There are no specific limitations on the shape of the polyester resin particles to be crushed, but polyester resin produced by a technique used in common production processes is in the form of pellets.

For the present invention, inorganic particles are added to the polyester resin powder material. There are no specific limitations on the method to be used to produce a uniform resin powder material mixture, and a generally known method may be used to mix the resin powder material and inorganic particles. In an adoptable method, the inorganic particles may be added when performing the aforementioned crushing to allow the crushing and mixing to be carried out simultaneously.

Useful methods for the mixing include mixing by shaking, simultaneous mixing and crushing in a ball mill, coffee mill, etc., mixing by a device with a stirring blade such as Nauta mixer, Henschel mixer, and kneader, mixing by a rotating container type device such as V-shape rotating mixer, liquid phase mixing in a solvent followed by drying, mixing by stirring in an air flow in a flash blender, mixing by spraying powder material and/ or slurry using an atomizer, etc., and mixing by using a twin screw extruder.

[Polyester resin powder mixture]

A polyester resin powder mixture prepared by adding inorganic particles, preferably together with an inorganic reinforcement material, to a polyester resin powder material has the features of high powder flowability and low compressability . More specifically, the angle of repose is 40° or less according to a preferred embodiment, 38° or less according to a more preferred embodiment, and 35° or less according to a still more preferred embodiment. Furthermore, it is possible to produce a polyester resin powder mixture having a compressability of 7.5 or less according to a preferred embodiment of the invention, 6.5 or less according to a more preferred embodiment, and 5.5 or less according to a still more preferred embodiment.

For the present invention, the angle of repose and the compressability are determined based on the Carr's flowability index measuring method (Non-patent document 1).

Such a powder mixture is high in flowability and resistant to compaction under powder pressure and accordingly, it will not easily cause troubles such as clogging during supply to and discharge from silos and blocking during air transport. Furthermore, it is small in mean diameter and accordingly able to easily penetrate into carbon fiber, glass fiber, woven fabric, and porous material, and it is expected that a polyester resin powder mixture containing an inorganic reinforcement material can serve to provide moldings with improved strength.

The polyester resin powder mixture according to the present invention can work suitably in processes such as injection molding and extrusion molding and serve to provide fibers, films, powder paints, carbon fiber composite materials, glass fiber composite materials, resins for impregnation of woven fabrics and porous materials, interlaminar spacers for two-layer films, and binders for powder metallurgy materials.

EXAMPLES

The present invention will now be illustrated with reference to Examples and Comparative examples, but it should be understood that the invention is not construed as being limited only thereto. The measuring methods used are as described below.

[Mean diameter]

The mean diameter of the polyester resin powder material was measured with a laser diffraction/scattering type particle size distribution measuring apparatus (MT3300EXII manufactured by Nikkiso Co., Ltd.) using 0.5 mass% aqueous solution of polyoxyethylene cumyl phenyl ether (trade name Nonal 912A, manufactured by Toho Chemical Industry Co., Ltd., hereinafter referred as Nonal 912A) as dispersion medium. Specifically, the microtracking technique was used to determine the total volume of the fine particles based on analysis of scattered laser light to prepare a cumulative data curve in which the total volume accounted for 100%, and then the particle diameter at the 50% point (accumulated from the small diameter end) in the cumulative data curve (median diameter, d50) was taken as the mean diameter of the polyester resin powder material.

The mean diameter of fumed silica was determined by observing a specimen by electron microscopy at a magnification of 100,000 times, randomly selecting 100 particles in the image, measuring their maximum lengths, which were assumed to represent their particle diameters, and calculating the number average value to represent their mean diameter. For other types of silica than fumed silica, the same method as used for the polyester resin powder material was used to determine the mean diameter.

[Maximum size]

The maximum size of inorganic reinforcement material was determined by observing a specimen by electron microscopy at a magnification of 1,000 times, randomly selecting 100 particles in the image, measuring their maximum lengths, and calculating the number average value to represent their maximum size.

[Uniformity coefficient]

To determine the uniformity coefficient of the polyester resin powder mixture, the particle diameter distribution was measured with a laser diffraction/scattering type particle size distribution measuring apparatus (MT3300EXII, manufactured by Nikkiso Co., Ltd.) and the d60/d10 ratio was taken as the uniformity coefficient of the polyester resin powder material. A broader particle size distribution gives a larger uniformity coefficient.

[Angle of repose]

The angle of repose of the polyester resin powder mixture was measured with a powder tester (PT-N, manufactured by Hosokawa Micron Corporation).

[Compressability]

The compressability of the polyester resin powder mixture was calculated by the equation given below from the loose bulk density and the tight bulk density measured by a powder tester (PT-N, manufactured by Hosokawa Micron Corporation).

$$\text{Compressability} = (\text{tight bulk density} - \text{loose bulk density}) / \text{tight bulk density} \times 100$$

[Tensile strength]

To determine the tensile strength of a molded product of the polyester resin powder mixture, a film with a thickness of 70 to 80 $\mu$m was prepared by holding the polyester resin powder mixture at 10 MPa for 5 minutes under a press controlled at 260°C and a 1 cm $\times$ 10 cm strip was cut out and subjected to test using a universal tester (Tensilon type universal tester RTG-1250, manufactured by A&D Company, Limited). The test was performed under the measuring conditions of a chuck interval of 50 mm and a tension speed of 50 mm/min, and the average of five measurements taken was calculated to represent the tensile strength.

[Production example 1]

In a production unit having a slurry production tank, a slurry storage tank, an esterification reaction tank, two preliminary polymerization tanks, a final polymerization apparatus, and a pelletizer connected in series, terephthalic acid and 1,4-butanediol were supplied at a ratio of 754 parts by weight to 692 parts by weight to the slurry production tank where they were mixed by stirring to prepare a slurry, which was then transferred to the slurry storage tank maintained at a constant temperature of 50°C and sent by a pump from the slurry storage tank to the complete mixing tank type esterification reaction tank equipped with a fractionating column (first esterification reaction tank) at a constant rate of 1,446 parts by weight/hour while at the same time, a 10%-concentration solution of tetra-n-butyl titanate (TBT) in 1,4-butanediol was supplied continuously to the esterification reaction tank at a rate of 4 parts by weight/hour ([OHin] = 7.72 parts by mole/hour, [THFin] = 0 part by mole/hour, [COOH] = 4.54 parts by mole/hour). The feed molar ratio (P') of the 1,4-butanediol to the terephthalic acid supplied to the first esterification reaction tank was 1.7, and the quantity of the TBT added was 56 ppm relative to the total polymer weight on the basis of the Ti atom. Here, THF refers to tetrahydrofuran.

The reaction conditions of the esterification reaction tank included a temperature of 230°C, a constant pressure of 73 kPa, and a residence time of 1.8 hours, and THF and water were distilled out from the top of the fractionating column while 1,4-butanediol was refluxed from the bottom of the fractionating column. In this instance, THF was distilled out at 68 parts by weight/hour from the top of the fractionating column, and the real molar ratio (P) was 1.49 in the esterification reaction tank ([THFout] = 0.94 parts by mole/hour and [OHout] = 0 part by mole/hour). In this esterification reaction tank, furthermore, an oligomer with a reaction rate of 95% for the dicarboxylic acid component was obtained.

Following this, the oligomer was supplied by a gear pump to the complete mixing tank type first preliminary polymerization tank and subjected to reaction under the conditions of a temperature of 245°C, a constant pressure of 4 kPa, and a residence time of 1 hour to obtain an oligomer with a reaction rate of 99.2% for the dicarboxylic acid component and an intrinsic viscosity of 0.20.

Then, this oligomer was supplied by a gear pump to the complete mixing tank type second preliminary polymerization tank while a 10%-concentration solution of TBT in 1,4-butanediol was added at a rate of 4 parts by weight/hour from a midway point in the pipe to the second preliminary polymerization tank (the quantity of the TBT added was 56 ppm relative to the total polymer weight on the basis of the Ti atom). The second preliminary polymerization tank was maintained at a temperature of 245°C and a pressure of 3.3 kPa and reaction was performed for a residence time of 1 hour to provide an oligomer with an intrinsic viscosity of 0.30.

This oligomer was supplied to the final polymerization unit (lateral-type biaxial reaction unit) and reaction was performed at a temperature of 240°C, a pressure of 200 Pa, and a residence time of 1.5 hours to produce a polymer. This polymer was discharged by a gear pump out of the system through a die to produce a strand, which was cooled with cooling water and pelletized by a pelletizer to provide polyester-1.

[Example 1]

Polyester-1 was subjected to crushing for 120 minutes in a jet mill (100 AFG, manufactured by Hosokawa Micron Corporation) to produce a powder material having a mean diameter of 50 $\mu$m and a uniformity coefficient of 2.9. As inorganic particles, spherical silica particles with a mean diameter of 50 nm produced by the sol-gel method and surface-treated with hexamethyl disilazane (X-24-9404, manufactured by Shin-Etsu Chemical Co., Ltd.) were added to this powder material at a ratio of 0.5 g to 100 g and mixed by shaking. The resulting polyester resin powder mixture had an angle of repose of 36° and a compressability of 5.2%, and the film produced by molding the polyester resin powder mixture had a tensile strength of 13 MPa.

[Example 2]

Except for adding 3.0 g of the inorganic particles, the same procedure as in Example 1 was carried out to produce a polyester resin powder mixture. The resulting polyester resin powder mixture had an angle of repose of 31° and a compressability of 5.3%, and the film had a tensile strength of 13 MPa.

[Example 3]

Except that the inorganic particles added were spherical silica particles with a mean diameter of 110 nm produced by the sol-gel method and surface-treated with hexamethyl dcisilazane (X-24-9163A, manufactured by Shin-Etsu Chemical Co., Ltd.), the same procedure as in Example 1 was carried out to produce a polyester resin powder mixture. The resulting polyester resin powder mixture had an angle of repose of 38° and a compressability of 5.5%, and the film had a tensile strength of 13 MPa.

[Comparative example 1]

Except for not adding inorganic particles, the same procedure as in Example 1 was carried out to produce a polyester resin powder mixture. The resulting polyester resin powder mixture had an angle of repose of 45° and a compressability of 17.1%, and the film had a tensile strength of 13 MPa.

[Comparative example 2]

Except for adding 10.0 g of the inorganic particles, the same procedure as in Example 1 was carried out to produce a polyester resin powder mixture. The resulting polyester resin powder mixture had an angle of repose of 33° and a compressability of 9.0%, and the film had a tensile strength of 13 MPa.

[Comparative example 3]

Except that the inorganic particles added were fumed silica particles with a mean diameter of 7 nm (AEROSIL380, manufactured by EVONIK), the same procedure as in Example 1 was carried out to produce a polyester resin powder mixture. The resulting polyester resin powder mixture had an angle of repose of 35° and a compressability of 7.9%, and the film had a tensile strength of 13 MPa.

[Comparative example 4]

Polyester-1 was subjected to crushing for 30 minutes in a jet mill (100 AFG, manufactured by Hosokawa Micron Corporation) to produce a powder material having a mean diameter of 90 $\mu$m and a uniformity coefficient of 5.7. As inorganic particles, spherical silica particles with a mean diameter of 50 nm produced by the sol-gel method and surface-treated with hexamethyl disilazane (X-24-9404, manufactured by Shin-Etsu Chemical Co., Ltd.) were added to this powder material at a ratio of 0.5 g to 100 g and mixed by shaking. The resulting polyester resin powder mixture had an angle of repose of 40° and a compressability of 7.9%, and the film had a tensile strength of 13 MPa.

[Example 4]

Polyester-1 was subjected to crushing for 120 minutes in a jet mill (100 AFG, manufactured by Hosokawa Micron Corporation) to produce a powder material having a mean diameter of 50 $\mu$m and a uniformity coefficient of 2.9. As inorganic particles, spherical silica particles with a mean diameter of 50 nm produced by the sol-gel method and surface-treated with hexamethyl disilazane (X-24-9404, manufactured by Shin-Etsu Chemical Co., Ltd.) and, as inorganic reinforcement material, glass beads with a maximum size of 30 $\mu$m (EGB731B, manufactured by Potters-Ballotini Co., Ltd.) were added to this powder material at a ratio of 0.5 g and 30 g to 70 g and mixed by shaking. The resulting polyester resin powder mixture had an angle of repose of 37° and a compressability of 4.9%, and the film had a tensile strength of 15 MPa.

[Example 5]

Except for adding 70 g of the inorganic reinforcement material, the same procedure as in Example 4 was carried out to produce a polyester resin powder mixture. The resulting polyester resin powder mixture had an angle of repose of 32° and a compressability of 4.3%, and the film had a tensile strength of 19 MPa.

[Example 6]

Except that the inorganic reinforcement material added was glass flakes with a maximum size of 50 $\mu$m (REF-015 A, manufactured by Nippon Sheet Glass Company, Ltd.), the same procedure as in Example 4 was carried out to produce a polyester resin powder mixture. The resulting polyester resin powder mixture had an angle of repose of 36° and a compressability of 5.1%, and the film had a tensile strength of 21 MPa.

[Example 7]

Except that the inorganic reinforcement material added was glass fiber with a maximum size of 120 $\mu$m (EPG70M-01N, manufactured by Nippon Electric Glass Co., Ltd.), the same procedure as in Example 4 was carried out to produce a polyester resin powder mixture. The resulting polyester resin powder mixture had an angle of repose of 40° and a compressability of 6.1%, and the film had a tensile strength of 19 MPa.

[Example 8]

Except that the inorganic reinforcement material added was carbon fiber with a maximum size of 180 $\mu$m (Panex35, manufactured by Zoltek), the same procedure as in Example 4 was carried out to produce a polyester resin powder mixture. The resulting polyester resin powder mixture had an angle of repose of 34° and a compressability of 6.1%, and the film had a tensile strength of 22 MPa.

[Table 1]

[Table 1]

| | Polyester resin | | Inorganic particles | | Inorganic reinforcement material | | | Characteristics of powder mixture | | Characteristics of moldings |
|---|---|---|---|---|---|---|---|---|---|---|
| | mean diameter (μm) | uniformity coefficient | mean diameter (nm) | content (wt%) | type | content (wt%) | maximum size (μm) | angle of repose (°) | compressability (%) | tensile strength (MPa) |
| Example 1 | 50 | 2.9 | 50 | 0.5 | - | - | - | 36 | 5.2 | 13 |
| Example 2 | 50 | 2.9 | 50 | 3.0 | - | - | - | 31 | 5.3 | 13 |
| Example 3 | 50 | 2.9 | 110 | 0.5 | - | - | - | 38 | 5.5 | 13 |
| Example 4 | 50 | 2.9 | 50 | 0.5 | glass beads | 30 | 30 | 37 | 4.9 | 15 |
| Example 5 | 50 | 2.9 | 50 | 0.5 | glass beads | 50 | 30 | 32 | 4.3 | 19 |
| Example 6 | 50 | 2.9 | 50 | 0.5 | glass flakes | 30 | 50 | 36 | 5.1 | 21 |
| Example 7 | 50 | 2.9 | 50 | 0.5 | glass fiber | 30 | 120 | 40 | 6.1 | 19 |
| Example 8 | 50 | 2.9 | 50 | 0.5 | carbon fiber | 30 | 180 | 34 | 6.1 | 19 |
| Comparative example 1 | 50 | 2.9 | - | - | - | - | - | 45 | 17.1 | 22 |
| Comparative example 2 | 50 | 2.9 | 50 | 10 | - | - | - | 33 | 9.0 | 13 |
| Comparative example 3 | 50 | 2.9 | 7 | 0.5 | - | - | - | 35 | 7.9 | 13 |
| Comparative example 4 | 90 | 5.7 | 50 | 0.5 | - | - | - | 40 | 7.9 | 13 |

INDUSTRIAL APPLICABILITY

The polyester resin powder mixture according to the present invention has high handleability attributed to high powder flowability and accordingly, it can serve suitably as material for injection molding and extrusion molding. Furthermore, the polyester resin powder mixture according to the present invention contains particles with very small diameters and has high powder flowability, and accordingly, it can be used suitably as it realizes high surface smoothness when used as base particles of powdery paints and shows high impregnating ability when used as matrix resin of carbon fiber reinforced plastics. In addition, high-strength molded products can be obtained when the polyester resin powder mixture according to the present invention is processed by injection molding or extrusion molding or when used as matrix resin for impregnation of carbon fiber or glass fiber.

**Claims**

1. A polybutylene terephthalate resin powder mixture comprising a polybutylene terephthalate resin powder material having a mean diameter of more than 1 $\mu$m and 100 $\mu$m or less and a uniformity coefficient of 4 or less and accounting for 100 parts by weight and inorganic particles having a mean diameter of 20 to 500 nm and accounting for 0.1 to 5 parts by weight, wherein the uniformity coefficient and the diameter of inorganic particles are measured by the methods described in the specification.

2. The polybutylene terephthalate resin powder mixture as set forth in claim 1, wherein the inorganic particles are silica particles.

3. The polybutylene terephthalate resin powder mixture as set forth in claim 1 or 2 further comprising an inorganic reinforcement material having an average maximum size of 1 $\mu$m or more and 200 $\mu$m or less and accounting for 25 to 150 parts by weight relative to 100 parts by weight of the polybutylene terephthalate resin powder material.

4. The polybutylene terephthalate resin powder mixture as set forth in claim 3, wherein the inorganic reinforcement material is at least one selected from the group consisting of glass beads, glass flakes, glass fiber, carbon fiber, aluminum oxide, soda lime glass, borosilicate glass, aluminosilicate ceramics, limestone, gypsum, bentonite, precipitated sodium silicate, amorphous precipitated silica, amorphous precipitated calcium silicate, amorphous precipitated magnesium silicate, amorphous precipitated lithium silicate, Portland cement, magnesium phosphate cement, magnesium oxychloride cement, magnesium oxysulfate cement, zinc phosphate cement, and zinc oxide.

**Patentansprüche**

1. Polybutylenterephtalatharz-Pulvergemisch, das ein Polybutylenterephtalatharz-Pulvermaterial mit einem mittleren Durchmesser von mehr als 1 $\mu$m und 100 $\mu$m oder weniger und einem Gleichförmigkeitskoeffizienten von 4 oder weniger, das 100 Gewichtsteile ausmacht, und anorganische Partikel mit einem mittleren Durchmesser von 20 bis 500 nm, die 0,1 bis 5 Gewichtsteile ausmachen, umfasst, wobei der Gleichförmigkeitskoeffizient und der Durchmesser der anorganischen Partikel gemäß den in der Beschreibung beschriebenen Verfahren gemessen werden.

2. Polybutylenterephtalatharz-Pulvergemisch nach Anspruch 1, wobei die anorganischen Partikel Siliciumdioxidpartikel sind.

3. Polybutylenterephtalatharz-Pulvergemisch nach Anspruch 1 oder 2, das weiters ein anorganisches Verstärkungsmaterial mit einer mittleren Maximalgröße von 1 $\mu$m oder mehr und 200 $\mu$m oder weniger umfasst, das 25 bis 150 Gewichtsteile, bezogen auf 100 Gewichtsteile des Polybutylenterephtalatharz-Pulvermaterials ausmacht.

4. Polybutylenterephtalatharz-Pulvergemisch nach Anspruch 3, wobei das anorganische Verstärkungsmaterial zumindest eines aus der aus Glasperlen, Glasflocken, Glasfasern, Kohlefasern, Aluminiumoxid, Natronkalkglas, Borosilikatglas, Aluminosilikatkeramik, Kalkstein, Gips, Bentonit, gefälltem Natriumsilikat, amorphem Kieselhydrogel, gefälltem amorphem Calciumsilikat, gefälltem amorphem Magnesiumsilikat, gefälltem amorphem Lithiumsilikat, Portlandzement, Magnesiumphosphatzement, Magnesiumoxychloridzement, Magnesiumoxysulfatzement, Zinkphosphatzement und Zinkoxid bestehenden Gruppe ausgewählt ist.

**Revendications**

1. Mélange de poudre de résine de polybutylène téréphtalate comprenant un matériau en poudre de résine de polybutylène téréphtalate ayant un diamètre moyen de plus de 1 $\mu$m et de 100 $\mu$m ou moins et un coefficient d'uniformité de 4 ou moins et représentant 100 parties en poids, et des particules inorganiques d'un diamètre moyen de 20 à 500 nm et représentant de 0,1 à 5 parties en poids, dans lequel le coefficient d'uniformité et le diamètre de particules inorganiques sont mesurés par des procédés décrits dans la description.

2. Mélange de poudre de résine de polybutylène téréphtalate selon la revendication 1, dans lequel les particules inorganiques sont des particules de silice.

3. Mélange de poudre de résine de polybutylène téréphtalate selon la revendication 1 ou 2, comprenant en outre un matériau de renforcement inorganique ayant une taille moyenne maximum de 1 $\mu$m ou plus et de 200 $\mu$m ou moins et représentant de 25 à 150 parties en poids par rapport à 100 parties en poids du matériau en poudre de résine de polybutylène téréphtalate.

4. Mélange de poudre de résine de polybutylène téréphtalate selon la revendication 3, dans lequel le matériau de renforcement inorganique est au moins un matériau choisi dans le groupe comprenant des billes de verre, des flocons de verre, de la fibre de verre, de la fibre de carbone, de l'oxyde d'aluminium, du verre sodocalcique, du verre de borosilicate, de la céramique d'aluminosilicate, du calcaire, du gypse, de la bentonite, du silicate de sodium précipité, de la silice précipitée amorphe, du silicate de calcium précipité amorphe, du silicate de magnésium précipité amorphe, du silicate de lithium précipité amorphe, du ciment Portland, du ciment de phosphate de magnésium, du ciment d'oxychlorure de magnésium, du ciment d'oxysulfate de magnésium, du ciment de phosphate de zinc, et de l'oxyde de zinc.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080268362 A1
- US 5451481 A
- JP 2015083668 A
- JP 2012167274 A
- JP 2006017954 A
- JP 2013119565 A
- JP 2006206897 A
- JP S5162858 A
- JP S63248875 A
- JP 2012197461 A
- JP 2013166667 A

**Non-patent literature cited in the description**

- Terminology Dictionary of Powder Technology. Nikkan Kogyo Shimbun, 30 March 2000, 56-57